# EUROPEAN PATENT APPLICATION

(11) **EP 4 614 250 A1**
(43) Date of publication of application: **10.09.2025**
(21) Application number: 22964216.0
(22) Date of filing: 28.11.2022
(51) Int. Cl.: G05B 19/418

(54) **MANAGEMENT METHOD AND APPARATUS FOR AUTOMATION SYSTEM, RESOURCE ALLOCATION METHOD AND APPARATUS FOR AUTOMATION SYSTEM, AND ELECTRONIC DEVICE**

(30) Priority: 04.11.2022 CN 202211376197
(71) Applicant: Megarobo Technologies Co., Ltd., Beijing 102200 (CN)
(72) Inventor: SHI, Peng, Beijing 102200 (CN); ZHAO, Songtao, Beijing 102200 (CN); LI, Gang, Beijing 102200 (CN)
(74) Representative: Hofmann, Matthias
(86) International application number: PCT/CN2022/134756
(87) International publication number: WO 2024/092920

(57) **Abstract**

Embodiments of the present invention provide a management method and apparatus for an automation system, a resource allocation method and apparatus for an automation system, an electronic device, and a storage medium. The management method comprises: in response to a resource pool addition instruction of a user for the automation system, constructing a resource pool of devices on the basis of the devices in the automation system, wherein the devices in the resource pool have the same device attribute, and the device attribute comprises a plate position attribute used for placing a sample container and a supported operation instruction; and building a test process of the automatic system on the basis of the resource pool. This facilitates free scheduling of the devices in the resource pool. Therefore, flexible allocation of a task to each device in each resource pool is facilitated, the dynamic optimization of an automatic process is realized, and the working efficiency of the automatic process is effectively improved. Furthermore, effective utilization of each device in the resource pool is facilitated, the utilization rate of the device is improved, and the resource use of the system is optimized.

## Description

The present application claims priority to Chinese Patent Application No.202211376197.X, titled "MANAGEMENT METHOD AND APPARATUS FOR AUTOMATION SYSTEM, RESOURCE ALLOCATION METHOD AND APPARATUS FOR AUTOMATION SYSTEM, AND ELECTRONIC DEVICE", filed on November 04, 2022 with the China National Intellectual Property Administration, which is incorporated herein by reference in its entirety.

### FIELD

The present disclosure relates to the field of automation control, and more specifically relates to a management method for an automation system, a resource allocation method for an automation system, a management apparatus for an automation system, a resource allocation apparatus for an automation system, an electronic device and a storage medium.

### BACKGROUND

Currently, automation transformations are constantly performed in various fields to achieve the purposes of liberating human labor and improving efficiency. Automation systems are extensively used in automated manufacturing, automated detection, automated testing, and the like. In an automation system, an entire automation process is decomposed into multiple steps and tasks are allocated to devices. The overall automation process is thus accomplished by having each device implement its task to ensure smooth execution of each step.

In an automation process, different steps take different amounts of time. For a step that takes a longer time, more devices of the same or similar type are usually configured to perform the step so that the devices can work in parallel to improve the efficiency of the automation process.

In the prior art, each device serves as an independent unit when an automation process is configured. For example, in a case that five first devices in the automation system work in parallel, the automation processes are configured for the five first devices respectively, i.e., five automation processes are configured. As a result, the workload for process configuration is heavy. On this basis, if the automation system includes not only five first devices but also three second devices, more combination modes of process configuration arise, thereby further increasing the workload of the process configuration. In addition, the automation processes configured in this manner are fixed, failing to be flexibly adjusted based on practical situations, and thus failing to optimize the scheduling and use of system resources.

### SUMMARY

In view of the above, the present disclosure is provided. According to an aspect of the present disclosure, a management method for an automation system is provided. The management method includes: in response to a resource pool addition instruction from a user for the automation system, constructing, based on devices in the automation system, a resource pool of the devices, where the devices in the resource pool have an identical device attribute, the device attribute includes a plate position attribute for placing a sample container and a supported operation instruction, and the devices in the resource pool are configured to perform an operation on the sample container or a sample in the sample container according to the operation instruction; building, based on the resource pool, a testing process of the automation system.

In an embodiment, the management method further includes: determining, in response to a device addition instruction from the user for the resource pool, whether a device attribute of a to-be-added device is identical to the device attribute of the devices in the resource pool; and adding the to-be-added device to the resource pool in a case that the device attribute of the to-be-added device is identical to the device attribute of the devices in the resource pool.

In an embodiment, the management method further includes: in a case that the device attribute of the to-be-added device is different from the device attribute of the devices in the resource pool, in response to a selection overriding instruction from the user, determining an attribute overriding direction, and modifying the device attribute of the to-be-added device or the device attribute of the devices in the resource pool based on the attribute overriding direction, where the attribute overriding direction includes overriding the device attribute of the devices in the resource pool with the device attribute of the to-be-added device, or overriding the device attribute of the to-be-added device with the device attribute of the devices in the resource pool; or canceling adding the to-be-added device to the resource pool in response to a device addition cancel instruction from the user.

In an embodiment, the resource pool addition instruction includes type information of the devices in the resource pool. The management method further includes: displaying, in response to the device addition instruction from the user for the resource pool, a list of devices with a type identical to a type of the devices in the resource pool, where devices of the identical type are configured to perform a same operation on the sample container or the sample in the sample container; and where the adding the to-be-added device to the resource pool includes: adding, in response to a device confirmation instruction from the user for a selected device in the list, the selected device to the resource pool.

In an embodiment, the displaying, in response to the device addition instruction from the user for the resource pool, a list of devices with a type identical to a type of the devices in the resource pool includes: displaying, in response to the device addition instruction from the user for the resource pool, a list of devices with a type and a driving instruction identical to a type and a driving instruction of the devices in the operation pool and not belonging to any resource pool, in a case that the resource pool is a non-empty operation pool.

In an embodiment, the management method further includes: determining, in response to an attribute configuration instruction from the user for the devices, the device attribute of the devices, where the supported operation instruction in the device attribute includes at least one of duration information, expiration time information, and maximum waiting time information, where the duration information is to determine duration for which the device is controlled to execute an operation instruction during the testing process; the expiration time information is to determine maximum sample safe duration for the device being controlled to execute the operation instruction during the testing process; and the maximum waiting time information is to determine maximum sample effective duration for the device being controlled to execute the operation instruction during the testing process.

In an embodiment, the management method further includes: determining, in response to a pre-operation/post-operation configuration instruction from the user for the device, a pre-operation performed before the device performs a main operation and/or a post-operation performed after the device performs the main operation, where the supported operation instruction in the device attribute includes pre-operation and/or post-operation related information, and the pre-operation and/or the post-operation is performed by a corresponding execution device.

In an embodiment, during the built testing process, all the devices in the resource pool are displayed in a form of the resource pool.

In an embodiment, the plate position attribute includes one or more of: a gripping orientation, a plate position layout, operation execution mechanism information of a plate, delidding or not, a delidding manner, a permissible sample container type, and a plate position type.

In an embodiment, the device attribute further includes a global attribute, and the global attribute is to establish a communication connection.

According to a second aspect of the present disclosure, a resource allocation method for the automation system is further provided. The resource allocation method includes: configuring, in response to a configuration instruction from a user for a resource pool in the automation system, a strategy for allocating resources for the resource pool, where devices in the resource pool have an identical device attribute, the device attribute includes a plate position attribute for placing a sample container and a supported operation instruction, and the devices in the resource pool are configured to perform an operation on the sample container or a sample in the sample container according to the operation instruction; and allocating, based on a strategy for allocating resources of a current resource pool, devices in the current resource pool when resources of the resource pool are allocated.

In an embodiment, the allocating, based on a strategy for allocating resources of a current resource pool, devices in the current resource pool includes: selecting, based on a least recently used strategy, a device has been idle for the longest time period among the devices in the resource pool when the devices of the resource pool are allocated; selecting, based on a forefront priority strategy, a device corresponding to a plate position in a forefront in a plate position sequence of devices in the automation system when the devices of the resource pool are allocated; and/or allocating, based on a resource pool sequence strategy, the devices based on a user-preset sequence of the devices in the resource pool when the devices of the resource pool are allocated.

According to a third aspect of the present disclosure, a management apparatus for the automation system is further provided. The management apparatus includes a resource pool construction module and a testing process building module. The resource pool construction module is configured to construct, based on devices in the automation system, a resource pool of the devices in response to a resource pool addition instruction from a user for the automation system, where the devices in the resource pool have an identical device attribute, the device attribute includes a plate position attribute for placing a sample container and a supported operation instruction, and the devices in the resource pool are configured to perform an operation on the sample container or a sample in the sample container according to the operation instruction. The testing process building module is configured to build, based on the resource pool, a testing process of the automation system.

According to a fourth aspect of the present disclosure, a resource allocation apparatus for the automation system is further provided. The resource allocation apparatus includes a strategy configuration module and a resource allocation module. The strategy configuration module is configured to configure, in response to a configuration instruction from a user for a resource pool in the automation system, a strategy for allocating resources for the resource pool, where devices in the resource pool have an identical device attribute, the device attribute includes a plate position attribute for placing a sample container and a supported operation instruction, and the devices in the resource pool are configured to perform an operation on the sample container or a sample in the sample container according to the operation instruction. The resource allocation module is configured to allocate, based on a strategy for allocating resources of a current resource pool, devices in the current resource pool when resources of the resource pool are allocated.

According to a fifth aspect of the present disclosure, an electronic device is further provided. The electronic device includes a processor and a memory. The memory stores computer program instructions, and the computer program instructions, when being executed by the processor, are to perform the management method for the automation system and/or perform the resource allocation method for the automation system as described above.

According to a sixth aspect of the present disclosure, a storage medium is further provided. The storage medium stores program instructions. The program instructions, when being executed, are to perform the management method for the automation system and/or perform the resource allocation method for the automation system as described above.

In the above technical solution, the resource pool serves as a managed unit, facilitating scheduling of the devices in the resource pool. For example, in the automation system, five first devices work in parallel and have an identical plate position attribute and identical supported operation instruction, and three second devices work in parallel and have an identical plate position attribute and an identical supported operation instruction. A resource pool of the first devices and a resource pool of the second devices are constructed correspondingly. A testing process is built based on the resource pool of the first devices and the resource pool of the second devices. For each resource pool of the two resource pools, the device resources in the resource pool are treated as a whole for scheduling and management, significantly reducing the workload of process configuration. Moreover, this solution is conducive to the flexible allocation of tasks to the devices in each resource pool, thereby dynamically optimizing of the automation process and effectively improving the work efficiency of the automation process. Furthermore, effective utilization of the devices in the resource pool is facilitated, the utilization rate of the devices is improved, and the resource use of the system is optimized. The descriptions hereinabove are merely brief descriptions of the technical solutions of the present disclosure. Specific embodiments of the present disclosure are described hereinafter, so that technical means of the present disclosure can be more clearly understood and can be implemented according to the content of the specification, and purposes, characteristics and advantages of the present disclosure can be more apparent and understandable.

### BRIEF DESCRIPTION OF THE DRAWINGS

Above and other objects, features, and advantages of the present disclosure will become more apparent with reference to the detailed description of the embodiments of the present disclosure made in conjunction with the drawings. The drawings are intended to provide further understanding of the embodiments of the present disclosure, and constitute a part of the specification. The drawings are intended to describe the present disclosure in conjunction with the embodiments of the present disclosure, and do not limit the present disclosure. In the drawings, same reference numerals generally represent same parts or steps.
FIG. 1 illustrates a flowchart of a management method for an automation system according to an embodiment of the present disclosure;
FIG. 2 illustrates a schematic diagram of a built testing process according to an embodiment of the present disclosure;
FIG. 3 illustrates a schematic diagram of a well plate according to an embodiment of the present disclosure;
FIG. 4 illustrates a flowchart of a management method for the automation system according to another embodiment of the present disclosure;
FIG. 5 illustrates a flowchart of a resource allocation method for the automation system according to an embodiment of the present disclosure;
FIG. 6 illustrates a schematic block diagram of a management apparatus for the automation system according to an embodiment of the present disclosure;
FIG. 7 illustrates a schematic block diagram of a resource allocation apparatus for the automation system according to an embodiment of the present disclosure; and
FIG. 8 illustrates a schematic block diagram of an electronic device according to an embodiment of the present disclosure.

### DETAILED DESCRIPTION

Exemplary embodiments of the present disclosure are described in detail with reference to the drawings to make purposes, technical solutions, and advantages of the present disclosure more apparent. Apparently, the described embodiments are only a part of the embodiments instead of all embodiments of the present disclosure. It should be understood that, the present disclosure is not limited by the exemplary embodiments described herein. Based on the embodiments of the present disclosure described herein, all other embodiments obtained by those skilled in the art without creative efforts are deemed to fall into the scope of protection of the present disclosure.

As described above, in the prior art, each device serves as an independent unit when an automation process is configured. An automation process is configured for each device. In addition, in a case that for different device types, there is more than one device of each type, it is indicated that multiple combination modes of process configurations exist. Moreover, the automation processes for the configurations described above are fixed. Therefore, a management method for an automation system is provided according to the present disclosure to solve problems of high workload in process configuration and low flexibility in the configured automation processes in the prior art.

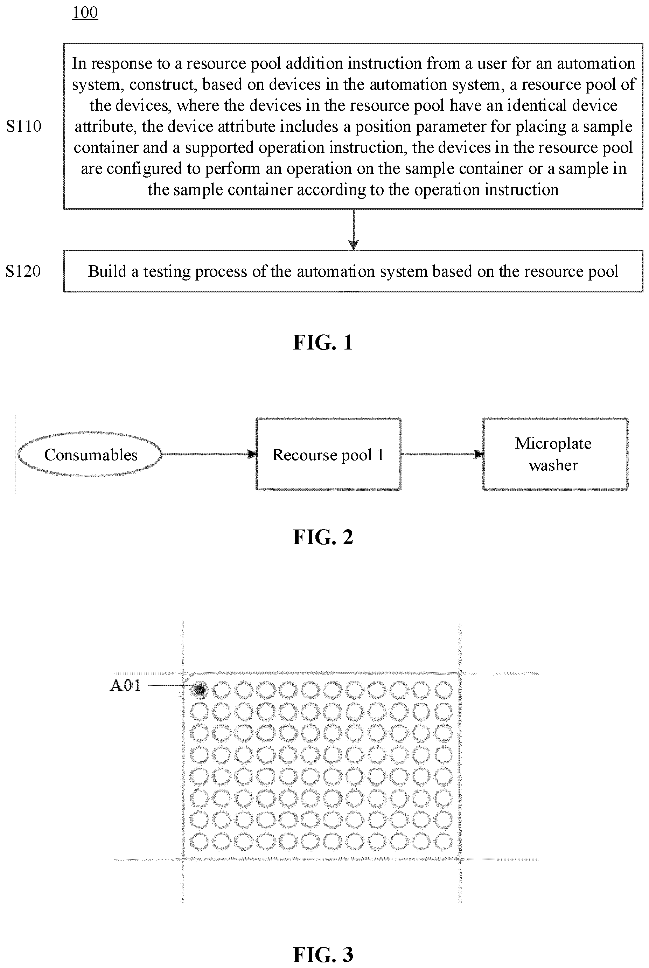

According to an embodiment of the present disclosure, a management method for an automation system is provided. The automation system may be configured to automatically implement testing based on a built testing process. The automation system includes multiple different devices to sequentially perform different operations on a test sample or a sample container of the test sample. The management method for the automation system is used to manage the devices in the automation system. FIG. 1 illustrates a flowchart of a management method 100 for an automation system according to an embodiment of the present disclosure. As shown in FIG. 1, the management method 100 includes the following steps S110 and S120.

In step S110, in response to a resource pool addition instruction from a user for the automation system, based on devices in the automation system, a resource pool of the devices is constructed. It can be understood that resources in the resource pool are the devices therein. The devices in the resource pool have an identical device attribute, and the device attribute includes a plate position attribute for placing a sample container and a supported operation instruction. The devices in the resource pool are configured to perform an operation on the sample container or a sample in the sample container according to the operation instruction.

In an embodiment, the user issues a resource pool addition instruction for the automation system by using an input apparatus (e.g., mouse, keyboard, and the like) of a host computer. It can be understood that the host computer provides a visual interface for the user so that the user can accurately issue an instruction. For example, the visual interface provided by the host computer includes a resource pool addition interface, and the user operates controls in the interface by using the input apparatus so as to issue a resource pool addition instruction. The resource pool addition interface may include a name and a type of the resource pool that is to be added, and a strategy for allocating resources for the devices in the resource pool. The name of the resource pool may be customized based on a user preference. For example, the user enters a desired name into a text box behind the name of the resource pool via the keyboard. The type of the resource pool and the strategy for allocating resources for the devices in the resource pool may be selected by means of a drop-down menu. In an embodiment, a default correspondence is between the type of the resource pool and the strategy for allocating resources for the devices in the resource pool. For example, when the type of the resource pool selected by the user is changed, the strategy for allocating resources to the devices in this resource pool is also changed correspondingly. Alternatively, if the default correspondence is not required by the user, the correspondence between the two can be modified in a related control by the user. After selecting the name and type of the resource pool and the strategy for allocating resources for the devices in the resource pool, the user may click a "Confirm" control in the resource pool addition interface so as to issue the resource pool addition instruction. **In** response to the above parameters in the resource pool addition instruction, a resource pool of devices is constructed based on the devices in the automation system. **In** an embodiment, the user further clicks the "Cancel" control in the resource pool addition interface to cancel the construction of the resource pool. The resource pool accommodates multiple devices. **In** a testing process of the automation system, multiple devices in the resource pool may be controlled as a managed unit, rather than being separate devices. The devices in the constructed resource pool have the identical device attribute. The device attribute includes the plate position attribute for placing the sample container and the supported operation instruction. The plate position attribute is to indicate how to perform a relevant operation on a plate placed on the plate position in the device, and may further include basic information of the plate position, such as a plate position layout mentioned below. The devices in the resource pool are configured to perform an operation on the sample container or a sample in the sample container according to the operation instruction. For example, a resource pool may include five liquid workstations. These five liquid workstations have an identical plate position attribute for placing the sample container. For example, each liquid workstation has four plate positions for accommodating well plates, and locations of the plate positions are the same. Also, all the five liquid workstations are configured to perform pipetting operations on samples in test tubes on the well plates. **In** order to facilitate uniform control of the devices in the resource pool, the devices in the resource pool are configured to support the same operation instructions. Based on device attribute of the devices, a resource pool including multiple devices is constructed. The plate position attribute for placing the sample container and the supported operation instruction in the device attribute of the devices in the resource pool cannot be arbitrarily modified separately. Therefore, it is ensured that the resource pool can be controlled as a managed unit. The device attribute is modified by configuring the resource pool as a whole. The user may selectively delete the constructed resource pool according to requirements. In an embodiment, the visual interface may further include a resource pool list interface to display a resource pool constructed by the user including multiple devices. Some of resource pools constructed based on the resource pool addition instruction from the user are displayed in a resource pool list. In a case that the user currently selects a resource pool 1, the user may click a "Delete Resource Pool" control in the resource pool list interface to delete the selected resource pool 1.

In step S120, based on the resource pool, the testing process of the automation system is built.

Based on the resource pool constructed in step S110 described above, the testing process of the automation system is built. As a result, it is determined how each device in the automation system performs its respective task to implement the testing process. When building the testing process, the user determines the time when each step in the testing process is to be performed, a device or a resource pool for performing the step, and execution duration for performing the step, and so on. With respect to the resource pool, during the specific execution of the testing process, a device for performing a step is selected dynamically based on states of the devices in the resource pool. The state of the device may include an available state and an unavailable state. Specifically, the available state indicates that the device is idle and available at this time instant. The unavailable state of a device may include: an off-line state, a busy state (that is, working at this time instant), and an error state.

In the above technical solution, the resource pool serves as a managed unit, facilitating scheduling of the devices in the resource pool. For example, in the automation system, five first devices work in parallel and have an identical plate position attribute and identical supported operation instruction, and three second devices work in parallel and have an identical plate position attribute and an identical supported operation instruction. A resource pool of the first devices and a resource pool of the second devices are constructed correspondingly. A testing process is built based on the resource pool of the first devices and the resource pool of the second devices. For each resource pool of the two resource pools, the device resources in the resource pool are treated as a whole for scheduling and management, significantly reducing the workload of process configuration. Moreover, this solution is conducive to the flexible allocation of tasks to the devices in each resource pool, thereby dynamically optimizing of the automation process and effectively improving the work efficiency of the automation process. Furthermore, effective utilization of the devices in the resource pool is facilitated, the utilization rate of the devices is improved, and the resource use of the system is optimized.

In an embodiment, during the built testing process, all the devices in the resource pool are displayed in the form of a resource pool.

In an embodiment, assuming that the resource pool 1 is selected by the user based on the resource pool list interface, a device list corresponding to the resource pool 1 is displayed in a current resource pool list interface. Specifically, the resource pool 1 may include three devices. In the testing process built by the user, the three devices in the resource pool 1 is displayed in the form of the resource pool 1, rather than three devices being displayed separately. In other words, during the built testing process, the resource pool is displayed as a node in the testing process. FIG. 2 illustrates a schematic diagram of a built testing process according to an embodiment of the present disclosure. As shown in FIG. 2, the resource pool 1 is shown as one of the nodes in the testing process, and devices in the node are not shown in detail one by one.

The resource pool is shown as a managed unit in the schematic diagram of the testing process, thereby facilitating the configuration, management, and understanding of the testing process by the user. In addition, the problem that devices in excessive quantities cause a poor user impression and a difficulty in obtaining effective information when the built testing process is displayed is effectively avoided. The neatness of the interface of the built testing process is ensured, and the viewing experience of the user is improved.

In an embodiment, an attribute is configured for a device first before the user constructs a resource pool of the devices. In response to an attribute configuration instruction from the user for the device, a device attribute of the device is determined. The device attribute includes a plate position attribute for placing a sample container and a supported operation instruction. The supported operation instruction in the device attribute includes duration information. The duration information is used to determine duration for which a device is controlled to perform an operation during the testing process.

In an embodiment, the visual interface further includes an interface where the user configures an operation instruction supported by the device. Multiple operable controls are included in the interface where the user configures an operation instruction supported by the device, and the operation controls are used to receive attribute configuration instructions from the user for devices respectively. One of the operable controls, such as a "Duration" control, is configured for the user to set duration information. The user enters duration for which a device performs an operation during the testing process into a text box in the "Duration" control via the keyboard. The duration information may be expressed in seconds. In a specific embodiment, the operation instruction supported by the device is incubation. The user may set duration of an incubation operation as 3600 seconds by using the "Duration" control.

The duration for which the device performs a main operation is set, which imposes the constraints for determination of the identical devices in the resource pool and enable finer device differentiation. Further, smooth execution of the testing process is ensured.

In an embodiment, the information of the operation instruction supported by the device further includes expiration time information and/or maximum waiting time information. The expiration time information is used to determine maximum sample safe duration for the device being controlled to execute the operation instruction during the testing process. The maximum waiting time information is used to determine maximum effective duration for the device being controlled to execute the operation instruction during the testing process.

In an embodiment, the interface where the user configures an operation instruction supported by the device described above further includes an "Expiration Time" control and a "Maximum Waiting Time" control, which are configured for the user to set the expiration time information and the maximum waiting time information respectively. Similarly, the unit of the expiration time information and the maximum waiting time information is expressed in seconds. The specific setting method may be found in the setting process of the duration information described above. For the sake of brevity, no further details will be repeated herein.

In an embodiment, the expiration time information is used to determine maximum safe duration for which the device continues to perform the operation upon the expiration of the duration. For example, an operation performed by an incubator during a testing process is culturing cells. The duration information for a culture operation of the incubator is set to 3600 seconds (1 hour). The maximum safe duration is set to 5400 seconds (1.5 hours). During actual execution, if execution time of the incubation operation of the incubator exceeds 9000 seconds, that is, the sum of 3600 seconds and 5400 seconds, the sample in the sample container cultured by the incubator is marked as a timeout sample. The mark serves as a reminder to the user. The user can determine whether the timeout sample influence a testing result based on an actual situation, and determine whether to continue the testing process based on the degree of influence. It can be understood that if the expiration time information is set to zero, a maximum safe duration restraint is disabled.

In an embodiment, the maximum waiting time information is used to determine a maximum sample effective duration for which the device continues to perform the operation upon the expiration of the duration. An example that the maximum safe duration restraint is enabled is illustrated below. The following description is given by still taking the example of the operation of culturing cells by the incubator described above. The duration information for the culture operation of the incubator is set to 3600 seconds (1 hour), the maximum sample safe duration is set to 5400 seconds (1.5 hours), and the maximum sample effective duration is set to 1800 seconds (half an hour). During actual execution, if the execution time of the incubation operation of the incubator exceeds 10800 seconds, that is, the sum of 3600 seconds, 5400 seconds and 1800 seconds, a sample processed by the incubator is discarded. Then, the discarded sample is transferred to a preset "error divert position" and labeled as "Canceled".

In this way, the expiration time information and the maximum waiting time information are set appropriately for different operations of different devices. This ensures the efficacy and availability of the samples, and further ensures smooth execution of the testing process. Therefore, an accurate testing result can be obtained.

In an embodiment, the plate position attribute for placing the sample container in the device attribute includes one or more of: a gripping orientation, a gripping height, operation execution mechanism information of a plate, delidding or not, a delidding manner, a permissible sample container type, and a plate position type. The following description is given based on an example where the sample container is a test tube. It can be understood that when the sample container is a test tube, the sample container can be placed by using a well plate. As a result, the configured plate position attribute is a plate position attribute of the well plate.

For example, the visual interface may further include an interface where the user configures a plate position attribute. The user may enter characters in a text box behind, for example, the "name" in the interface where the user configures the plate position attribute via a keyboard to customize a name for the well plate. In an embodiment, the user configures a plate position type of the well plate through an operable control in the interface where the user configures the plate position attribute. Specifically, the operable control includes a "SingleNest" control, a "NestGroup" control, and a "StackNest" control. The "SingleNest" indicates a single plate position for storing a single well plate. The "NestGroup" indicates a plate position group, which refers to a collection of plate positions arranged according to a certain rule. The "StackNest" indicates a stacked plate position, which refers to a plate position stack in a stackable plate site. This type of plate position is different from the plate position group. The plate position group employs a random storing and retrieving mode. The stacked plate position employs a sequential storing and retrieving mode. The stacked plate position only supports storing and retrieving the bottom or topmost well plate, and a well plate cannot be stored in or retrieved from the middle position. It can be understood that during the plate position attribute configuration in the embodiment, the user can only select any one of these three plate position types according to specific requirements to determine attribute of the plate position of the well plates. When the user selects one of the types, a selection mark, such as a filled circle or a check mark, may be displayed in front of the control corresponding to the type.

In an embodiment, the user further configures operation execution mechanism information in the interface where the user configures the plate position attribute. Accordingly, the interface where the user configures the plate position attribute further includes a "Labware Handler Accessible" control, which indicates whether the well plate can be directly accessed by a robotic arm. When the user selects the control, the robotic arm of the automation system can directly transfer the well plate. If the user does not select the control, the automation system controls an internal mechanism of the device to transfer the well plate.

When the "Labware Handler Accessible" is selected by the user, the user configures the gripping orientation for the well plate on the interface where the user configures the plate position attribute. FIG. 3 illustrates a schematic diagram of a well plate according to an embodiment of the present disclosure. The gripping orientation and an offset are configured for the well plate by using following controls in the interface where the user configures the plate position attribute. Referring to FIG. 3, A01 represents an aperture in the well plate. Specifically, the interface where the user configures the plate position attribute may include a "Narrow" control, a "Wide" control, a "Reverse-Narrow" control, and a "Reverse-Wide" control. The "Narrow" control indicates that the robotic arm of the automation system grabs the well plate from a narrow side distant from an aperture A01. The "Wide" control indicates that the robotic arm of the automation system grabs the well plate from a wide side distant from the aperture A01. The "Reverse-Narrow" control indicates that the robotic arm of the automation system grabs the well plate from a narrow side proximate to the aperture A01. The "Reverse-Wide" control indicates that the robotic arm of the automation system grabs the well plate from a wide side proximate to the aperture A01. The user may set the above four parameters via a "Parameter Setting" control. The "Parameter Setting" control may include four numbers. These four numbers may represent, in sequence, a minimum offset for grabbing the well plate from the narrow side, a maximum offset for grabbing the well plate from the narrow side, a minimum offset for grabbing the well plate from the wide side, and a maximum offset for grabbing the well plate from the wide side respectively. In the embodiment, the offset is expressed in millimeters (mm). For example, the user selects the "Narrow" control and then sets the number in the "Parameter Setting" control as "0/2/0/0". As a result, the number indicates that the robotic arm of the automation system grabs the well plate from a narrow side distant from the aperture A01, and that a permissible gripping height is 0-2mm from the bottom of the narrow side.

In an embodiment, the interface where the user configures the plate position attribute further includes a "Layout" control. The user uses the "Layout" control to configure a layout of the plate position (a physical layout of the plate position). The "Layout" control may be a text entry box, a number adjustment device, and so on. The following description is given based on an example where the "Layout" control is a number adjustment device. Specifically, the "Layout" control may include an "X-axis", "Y-axis", "Z-axis" and their corresponding text boxes, and an up/down arrow for adjusting a number. The user may click the up and down arrows in the "Layout" control to configure the layout of the plate position in the corresponding direction. It can be understood that clicking the up arrow decreases a value in a corresponding text box, and clicking the down arrow increases a value in the corresponding text box. For example, for a layout for the liquid workstation being a planar layout with two rows in the X direction and four rows in the Y direction, the X, Y, and Z correspond to 2, 4, and 1, respectively. For example, for a plate site, assuming that seven plate positions are in the Z direction, one row in the X direction and one row in the Y direction, the X, Y, and Z correspond to 1, 1, and 7, respectively.

In an embodiment, the interface where the user configures the plate position attribute may further include a "Lidding/Delidding Operation" control. The user may also use the "Lidding/Delidding Operation" control to configure whether to perform delidding or not. When the user selects the "Lidding/Delidding Operation" control, a lidding or delidding operation is performed on the well plate. Otherwise, when the user does not select the control, it is not required to perform a lidding or delidding operation on the well plate.

In an embodiment, the interface where the user configures the plate position attribute further includes operable controls for the user configuring a delidding manner and configuring a permissible sample container type. Specifically, a "Lid Position" control and a "Plate Position Permitted Sample Type" control are respectively displayed in the interface where the user configures the plate position attribute, so that the above information is configured by the user as desired. For example, a lid position may include: a lid suction device, a source position, and other positions. The user selecting a lid suction device in the "Lid Position" control indicates that delidding is performed by using the lid suction device, and the lid is sucked onto the lid suction device after the delidding. Similarly, selecting the source position or other positions indicates that the delidding is performed by the using the robotic arm or the like, and the lid is located at the source position or other positions after the delidding. The gripping structure grips a sample container or a lid of the sample container. The sample container type may be determined according to the size, specification, or the like of the sample container. For example, the sample container may include a deep well plate, a shallow well plate, a lid, and the like.

The user can customize the configurations of the above multiple plate position attributes, thereby greatly satisfying different requirements of the user. Moreover, by categorizing the plate position attributes into various types, devices are allocated into resource pools in a fine manner, thus ensuring the smooth execution of the built testing process.

In an embodiment, the device attribute of the devices in the automation system further includes a global attribute, and the global attribute is used to establish a communication connection. The communication connection refers to a connection between a management system and a device (specifically a driver of the device) in the automation system. The mode of the communication connection may be a network connection. The global attribute of the device can be customized and modified to establish communication connections with other devices, host computers, and the like, as long as the communication between the devices is implemented successfully. The global attribute of the device does not affect the control for the resource pool as a managed unit. In addition, the global attribute is set for the configuration of the device driver, such as the configuration of the incubator, which includes whether the incubator has a vibration function, an upper/ lower limit of the temperature of the incubator, and so on.

As a result, the global attribute of the device is set for implementing communication with the devices and facilitate transmission of instructions to the devices.

In an embodiment, the global attribute includes an IP address and port information. In an embodiment, the visual interface further includes an interface for configuring the global attribute. The interface for configuring the global attribute includes an "IP" control, a "Port" control, and the like. Specifically, the user may input an IP address in the "IP" control and port information in the "Port" control via an input apparatus. It can be understood that IP addresses of devices on the same network are unique. The device corresponds to an IP address may be provided with port numbers.

As a result, different devices are provided with corresponding IP addresses and port information, ensuring that the devices can successfully receive instructions, thus ensuring smooth execution of the testing process.

In an embodiment, the management method 100 further includes determining, in response to a pre-operation/post-operation configuration instruction from the user for the device, a pre-operation performed before the device performs a main operation and/or a post-operation performed after the device performs the main operation. The supported operation instruction in the device attribute of the device includes pre-operation and/or post-operation related information. The pre-operation and/or post-operation are performed by corresponding execution devices. It can be understood that, for different devices, the execution device of the pre-operation and/or the post-operation and a node device to which the pre-operation and/or the post-operation belong may be the same or different.

The interface where the user configures an operation instruction supported by the device may further includes a "Pre-operation/Post-operation" control. The user may click the "Edit" in the "Pre-operation/Post-operation" control to access a pre/post operation configuration interface of the device. For example, for a microplate washer, a main operation is plate washing. In an embodiment, a pre-operation/post-operation is configured for the plate washing: transfer by robotic arm. As a result, when the testing process proceeds to a microplate washer node, a robotic arm transfers a well plate required to be washed to a workdeck of the microplate washer according to the testing process. Afterwards, the microplate washer performs a plate washing operation on the well plate. After the plate washing operation, the robotic arm transfers the well plate to a position of a next node device in the testing process. In this example, the robotic arm, which is the execution device for the pre-operation/post-operation, and the microplate washer, which is the node device to which the pre-operation/post-operation belongs, are different devices.

As a result, a corresponding pre-operation/post-operation may be configured for each device, simplifying the interface and effectively avoiding errors in the testing process. More importantly, based on the pre-operation and/or post-operation related information of the device, the consistency of the devices in the resource pool is ensured from another perspective, which in turn facilitates the smooth execution of the testing process.

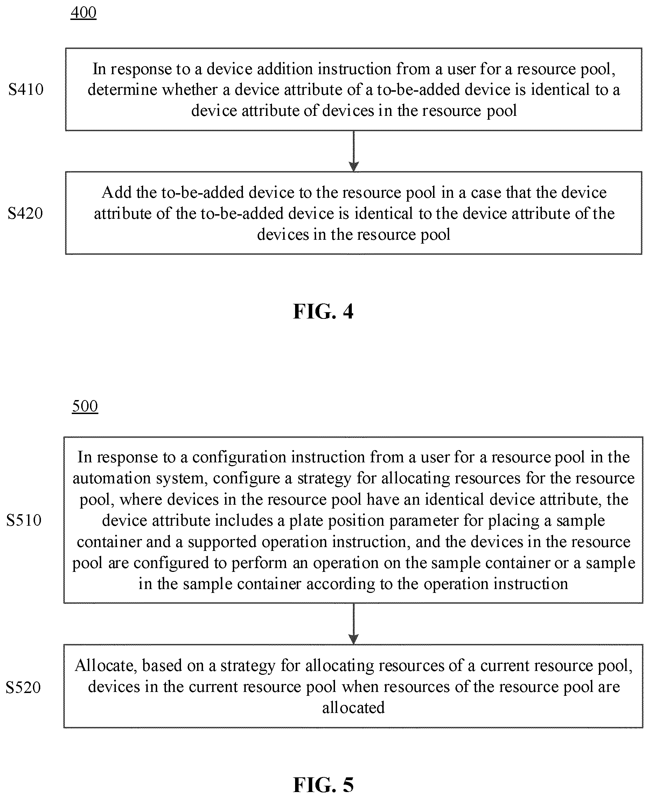

FIG. 4 illustrates a flowchart of a management method 400 for the automation system according to another embodiment of the present disclosure. The management method 400 supports device addition to an existing resource pool. As shown in FIG. 4, the management method 400 may include, in addition to the foregoing steps S110 and S120, the following steps S410 and S420 between the two steps.

In step S410, in response to a device addition instruction from the user for the resource pool, it is determined whether a device attribute of a to-be-added device is identical to the device attribute of the devices in the resource pool.

In an embodiment, an interface is provided to the user, the interface is configured with an operable control, and the operable control is used to receive the device addition instruction for the currently activated resource pool from the user. The device addition instruction includes information of the to-be-added device. For example, a name or identifier of the to-be-added device may be inputted by the user. A device attribute of the to-be-added device is determined based on the information of the to-be-added device. Upon receiving the device addition instruction inputted by the user via the operable control, it is determined whether the device attribute of the to-be-added device is identical to the device attribute of the devices in the currently activated resource pool. As described above, the device attribute includes a plate position attribute for placing the sample container and a supported operation instruction.

In step S420, in a case that the device attribute of the to-be-added device is identical to the device attribute of the devices in the resource pool, the to-be-added device is added to the resource pool.

Based on a determination result in step S420, it is determined whether to add the to-be-added device to the resource pool. In a case that the device attribute of the to-be-added device is identical to the device attribute of the devices in the resource pool, the to-be-added device is added to the resource pool. In a case that the device attribute of the to-be-added device is different from the device attribute of the devices in the resource pool, the user may be prompted that the device addition fails.

The above-described technical solution supports the addition of a suitable device into an existing resource pool, adjusting the scale of the devices of the resource pool and thereby adjusting the processing capacity of the automation system. Moreover, based on the solution, the added device serves as part of the resource pool and is subject to unified control and management for the resource pool, ensuring the smooth operation of the automation system.

In an embodiment, after step S410, the determining whether a device attribute of a to-be-added device is identical to the device attribute of the devices in the resource pool, the management method 100 further includes: in the case that the device attribute of the to-be-added device is different from the device attribute of the devices in the resource pool, determining, in response to a selection overriding instruction from the user, an attribute overriding direction, and modifying, based on the attribute overriding direction, a corresponding device attribute of the to-be-added device or the devices in the resource pool, where the attribute overriding direction includes overriding a corresponding device attribute of the devices in the resource pool with the device attribute of the to-be-added device or overriding the device attribute of the to-be-added device with the device attribute of the devices in the resource pool; or cancelling adding the to-be-added device to the resource pool in response to a device addition cancel instruction from the user.

In an embodiment, based on a device attribute conflict interface, the device attribute conflict interface is automatically displayed when it is determined that the device attribute of the to-be-added device is different from the device attribute of the devices in the resource pool in step S410. The device attribute conflict interface is configured to receive the selection overriding instruction from the user. The device attribute conflict interface may include three columns of an attribute name, a device attribute of devices in a resource pool, and a device attribute of a to-be-added device. The attribute name may include the name of a conflicting device attribute. For example, the conflicting device attribute may be a plate position attribute, or an operation instruction supported by the device. In a first embodiment of the device attribute conflict interface, a conflict exists in an attribute of a lid in the plate position attribute. The attribute of the lid of the devices in the resource pool is either lidded or unlidded. However, the attribute of to-be-added device is lidded. In the case that the device attributes conflict, the user selects the attribute overriding direction by using an "Override the device attribute of the to-be-added device with the device attribute of the devices in the resource pool" control and an "Override the device attribute of the devices in the resource pool with the device attribute of the to-be-added device" control. The selection of the "Override the device attribute of the to-be-added device with the device attribute of the devices in the resource pool" control indicates that the device attribute of the to-be-added device is overridden by using the device attribute of the devices in the resource pool in the case that device attributes conflict. After selecting this control, the user may click an "Override and add" control to issue a selection overriding instruction to modify the device attribute of the to-be-added device to be identical to the device attribute of the devices in the resource pool. In a second embodiment of the device attribute conflict interface, the attribute of the lid of the to-be-added device is modified to be either lidded or unlidded. For example, the user selects the "Override the device attribute of the devices in the resource pool with the device attribute of the to-be-added device" control. After that, the user clicks the "Override and add" control to issue a selection overriding instruction. As a result, the device attribute of the devices in the resource pool is overridden by using the device attribute of the to-be-added device. That is, the device attribute of the devices in the resource pool is modified to be identical to the device attribute of the to-be-added device. In the first embodiment of the device attribute conflict interface, the attribute of the lid in the device attribute of the devices in the resource pool is modified to be lidded.

In an embodiment, when a conflict exists in the device attribute, the user clicks the "Cancel" in the device attribute conflict interface to cancel adding the to-be-added device. As a result, the device attribute of the devices in the resource pool remains unmodified.

As a result, in the case that the device attribute of the to-be-added device is different from the device attribute of the devices in the resource pool, user is prompted to determine whether to modify the device attributes of the to-be-added device and the devices in the resource pool. In a case of determining to make modifications, the user may implement one-click modification of the device attribute of the to-be-added device or the device attribute of the devices in the resource pool, so that the device attribute of the to-be-added device and the device attribute of the devices in the resource pool are modified to be identical. Then the to-be-added device is added to the resource pool. The modification method is simple and facilitates user operation. In a case of determining not to make modifications, the user may cancel the addition of the to-be-added device. Requirements of different users are satisfied, and user experience is improved.

In an embodiment, a resource pool addition instruction to the automation system includes type information of the devices in the resource pool. For example, the type information may include: an operation pool, a storage pool, and the like. The type information of the devices in the resource pool is included in the resource pool addition instruction, so the type information of the devices in the resource pool can be obtained even if it is an empty resource pool with no devices. For example, an operation pool may be constructed based on one or more robotic arms, and an operation pool may be constructed based on one or more liquid workstations. A storage pool may be constructed based on one or more incubators, and a storage pool may be constructed based on a plate site, a plate selection site, and an incubator, and the like.

The management method 100 may further includes: displaying, in response to the device addition instruction from the user for the resource pool, a list of devices with a type identical to the type of the devices in the resource pool, where devices of the identical type are configured to perform a same operation on the sample container or the sample in the sample container.

In an embodiment, the resource pool list interface as described above further includes an "Add Device" control configured to add a device to a selected resource pool. The user clicks the "Add Device" control to display a device addition interface. The device addition interface includes a "Device" control. In an embodiment, the "device" control may be a drop-down menu. The user selects a device which is to be added to the resource pool in the list of the drop-down menu. The devices in the list are of an identical type. All of the devices perform the same operation on the sample container or the sample in the sample container. For example, all of the devices in the list are configured to perform an incubation operation on the sample in the sample container.

Step S420 adding the to-be-added device to the resource pool includes: adding, in response to a device confirmation instruction from the user for a selected device in the list, the selected device into resource pool.

After the user selects a device which is to be added in the list, the name of the device may be displayed in a display area of the "Device" control. In this case, the user clicks the "Confirm" control in the device addition interface to issue a device confirmation instruction. In response to the device confirmation instruction, the device selected by the user is added to the resource pool.

It can be understood that the above-described operation of adding the device to the resource pool may be performed on an empty resource pool or performed on a non-empty resource pool.

Only a list of devices of an identical type is displayed, limiting the range of devices that the user can add and facilitating user operation, so that the device to be added to the resource pool can be directly selected.

In an embodiment, the displaying, in response to the device addition instruction from the user for the resource pool, a list of devices with a type identical to a type of the devices in the resource pool includes: in response to the device addition instruction from the user for the resource pool, in a case that the resource pool is a non-empty operation pool, displaying a list of devices with a type and a driving instruction identical to a type and a driving instruction of the devices in the operation pool and not belonging to any resource pool. In this embodiment, if the resource pool is a non-empty operation pool, some devices are included in the resource pool. The type of a device permitted to be added and a driving instruction are determined based on the device attribute of the devices included in the resource pool. The driving instruction is used to enable communication between the host computer and the device, enabling the device to perform an operation on the sample container or the sample in the sample container based on the operation instruction. Devices that may be added to the resource pool are determined based on the determined type and driving instruction. Among these devices that may be added to the resource pool, a device that has not yet been added to any resource pool is selected as the device permitted to be added. In response to the device addition instruction from the user for the resource pool, a list of the devices permitted to be added described above is displayed for the non-empty operation pool.

For example, the user adds a device having a driving instruction of A in the operation pool in advance, and the operation pool is non-empty. In response to a device addition instruction from the user, all devices with a type being the operation pool, having the driving instruction of A, and not belonging to any resource pool are displayed in the list. The user selects a device to be added to this operation pool from the list as required. Similarly, in response to a device confirmation instruction from the user for the selected device in the list, the device is added to the operation pool.

As a result, the system directly selects devices with a type and a driving instruction identical to the type and the driving instruction of the devices in the operation pool, and display a list of these devices. Based on the list, the user can directly select a device to be added, which avoids a device attribute conflict between the to-be-added device and the devices in the operation pool, and the operation is simple to implement.

According to a second aspect of the present disclosure, a resource allocation method for the automation system is further provided. FIG. 5 illustrates a flowchart of a resource allocation method 500 for the automation system according to an embodiment of the present disclosure. As shown in FIG. 5, the resource allocation method 500 may include the following steps S510 and S520.

In step S510, in response to a configuration instruction from a user for a resource pool in the automation system, a strategy for allocating resources is configured for the resource pool. Devices in the resource pool have an identical device attribute, and the device attribute includes a plate position attribute for placing a sample container and a supported operation instruction. The devices in the resource pool are configured to perform an operation on the sample container or a sample in the sample container according to the operation instruction.

In an embodiment, the resource pool addition interface described above further includes a "Strategy" control for receiving the configuration instruction from the user for the resource pool. In an embodiment, the "Strategy" control may be a drop-down menu. When the resource pool is constructed, the drop-down menu of the "Strategy" control is used to select a strategy for allocating resources of the constructed resource pool. It can be understood that the strategy for allocating resources may refer to a strategy for allocating devices in the resource pool for working during the execution of the actual testing process.

In step S520, when resources of the resource pool are allocated, based on a strategy for allocating resources of a current resource pool, devices in the current resource pool are allocated.

In an embodiment, the testing process involves two resource pools, where the first resource pool includes five devices and the second resource pool includes three devices. Based on step S510, strategies for allocating resources for the two resource pools are configured respectively. During the testing process, when the testing step proceeds to the first resource pool performing an operation, operations to be performed in the testing step are allocated to the devices in the first resource pool based on the strategy for allocating resources of the first resource pool. When the testing step proceeds to the second resource pool performing an operation, operations to be performed in the testing step are allocated to the devices in the second resource pool based on the strategy for allocating resources of the second resource pool.

The user configures the strategy for allocating resources of the resource pool, to ensure that operations are reasonably allocated to devices in each resource pool based on the strategy for allocating resources of the current resource pool during the actual testing process, and thus optimizing the use of the devices in the automation system.

In an embodiment, the strategy for allocating resources includes a least recently used strategy, a forefront priority strategy, and/or a resource pool sequence strategy. The allocating, based on a strategy for allocating resources of a current resource pool, devices in the current resource pool may include any one or more of the following steps.

Based on the least recently used strategy, a device that has been idle for the longest time period among the devices in the resource pool is selected when the devices in the resource pool are allocated. Preferably, the least recently used strategy is more applicable to a resource pool of which the type is operation pool, and particularly applicable to a resource pool of devices that require consumables, such as a resource pool of a microplate washer. The consumable may be the detergent used by the microplate washer for washing plates. Resource allocation for the resource pool is performed based on the least recently used strategy, avoiding premature exhaustion of consumables of one of the devices in the resource pool. In other words, the usage frequencies of all devices in the resource pool are balanced.

Based on the forefront priority strategy, a device corresponding to the plate position in the forefront in the system-default plate position sequence of the devices is selected when the devices in the resource pool are allocated. The plate position is a location for placing the sample container. The system-default plate position sequence of the devices is set from experience. The plate position in the forefront in the system-default plate position sequence of the devices is selected preferentially, and a device corresponding to the plate position serves as the execution device of the step when the devices in the resource pool are allocated. Preferably, the forefront priority strategy is more applicable to the devices of the storage pool. This forefront priority strategy, based on the plate position sequence, facilitates the system's scheduling of the devices for performing operations on the sample container or the sample in the sample container at the plate position, as well as the execution of the main operation of the device.

Based on the resource pool sequence strategy, the devices are allocated based on a user-preset device sequence when the devices in the resource pool are allocated. According to the above embodiment, the selected resource pool is the resource pool 1. The resource pool 1 includes three devices. If a resource pool sequence strategy is configured for the resource pool 1, the devices may be allocated based on the sequence of the devices in the device list of the resource pool list when the devices of the resource pool are allocated. In an embodiment, an up arrow is further included in a resource pool list display interface, and the user adjusts the sequence of the devices in the resource pool by clicking the up arrow. When the devices in the resource pool are allocated, the devices are allocated based on the adjusted device sequence. This resource pool sequence strategy features simple logic and a low error probability, ensuring the smooth operation of the automation system.

Different strategies for allocating resources may be preset for different resource pools. The user sets the strategy for allocating resources based on the type of resource pool and so on. Based on the reasonable strategy for allocating resources, the devices in the resource pool can work more efficiently, ensuring that the testing process of the automation system is performed in an efficient and orderly manner.

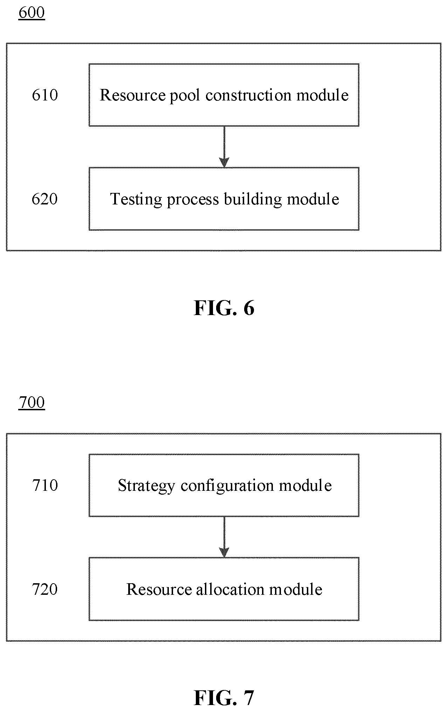

According to a third aspect of the present disclosure, a management apparatus for the automation system is further provided. FIG. 6 illustrates a schematic block diagram of a management apparatus 600 for the automation system according to an embodiment of the present disclosure. As shown in FIG. 6, the device 600 includes a resource pool construction module 610 and a testing process building module 620.

The resource pool construction module 610 is configured to construct, based on devices in the automation system, a resource pool of the devices in response to a resource pool addition instruction from a user for the automation system, where the devices in the resource pool have an identical device attribute. The device attribute includes a plate position attribute for placing a sample container and a supported operation instruction, and the devices in the resource pool are configured to perform an operation on the sample container or a sample in the sample container according to the operation instruction.

The testing process building module 620 is configured to build, based on the resource pool, a testing process of the automation system.

According to a fourth aspect of the present disclosure, a resource allocation apparatus for the automation system is further provided. FIG. 7 illustrates a schematic block diagram of a resource allocation apparatus 700 for the automation system according to an embodiment of the present disclosure. As shown in FIG. 7, the apparatus 700 includes a strategy configuration module 710 and a resource allocation module 720.

The strategy configuration module 710 is configured to configure, in response to a configuration instruction from a user for a resource pool in the automation system, a strategy for allocating resources for the resource pool, where devices in the resource pool have an identical device attribute. The device attribute includes a plate position attribute for placing a sample container and a supported operation instruction, and the devices in the resource pool are configured to perform an operation on the sample container or a sample in the sample container according to the operation instruction.

The resource allocation module 720 is configured to allocate, based on a strategy for allocating resources of a current resource pool, devices in the current resource pool when resources of the resource pool are allocated.

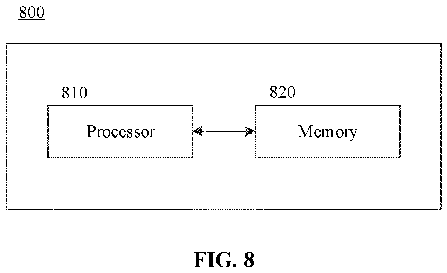

According to a fifth aspect of the present disclosure, an electronic device is further provided. FIG. 8 illustrates a schematic block diagram of an electronic device 800 according to an embodiment of the present disclosure. As shown in FIG. 8, the electronic device 800 includes a processor 810 and a memory 820. The memory 820 stores computer program instructions, and the computer program instructions, when being executed by the processor 810, are to perform the management method for the automation system and the resource allocation method for the automation system described above.

According to a sixth aspect of the present disclosure, a storage medium is further provided. The storage medium stores program instructions, and the program instructions, when being executed, are to perform the management method for the automation system and the resource allocation method for the automation system described above. The storage medium may include, for example, a storage component of a tablet computer, a hard disk of a computer, a read-only memory (ROM), an erasable programmable read-only memory (EPROM), a portable compact disc read-only memory (CD-ROM), a USB memory, or any combination of the above mentioned storage media. The described computer-readable storage medium may be any combination of one or more computer-readable storage media.

Those skilled in the art can understand the specific implementations and beneficial effects of the management apparatus for the automation system, the resource allocation apparatus for the automation system, the electronic device, and the storage medium described above by reading the description related to the management method for the automation system and the resource allocation method for the automation system described above, which is not repeated herein for the sake of brevity.

Although the embodiments have been described herein with reference to the drawings, it should be understood that the above embodiments are merely exemplary and are not intended to limit the scope of the present disclosure. Many changes and modifications may be made by those skilled in the art without departing from the scope and spirit of the present disclosure. All such changes and modifications are deemed to fall into the scope of the claims of the present disclosure.

Those skilled in the art may realize that the units and algorithm steps of each example described in conjunction with the embodiments disclosed herein can be implemented by electronic hardware, or a combination of computer software and electronic hardware. Whether these functionalities are performed in hardware or software depends on the specific application and design constraints of the technical solution. Those skilled in the art may implement the described functionality in various manners for each specific application, while such implementations should not be considered to be beyond the scope of the present disclosure.

It should be understood that the devices and methods disclosed in the embodiments of the present disclosure may be implemented in other manners. For example, the device embodiments described hereinabove are only schematic. For example, the division of the units is only based on logical functions, and there may be other division ways in actual implementation, such as multiple units or components may be combined or integrated into another device, or some features can be neglected or not executed.

In the specification provided herein, a lot of specific details are described. However, it may be appreciated that the embodiments of the present disclosure may be practiced without these specific details. In some instances, well-known methods, structures and techniques are not shown in detail in order to avoid obscuring understanding of the description.

Similarly, it should be understood that in order to simplify the present disclosure and help to understand one or more of the various aspects of the present disclosure, in the description of the exemplary embodiments of the present disclosure, the various features of the present disclosure are sometimes grouped together into a single embodiment, figure, or description thereof. However, the method according to the present disclosure should not be interpreted as reflecting the following intention: the claimed disclosure requires more features than those explicitly stated in each claim. More specifically, as reflected in the corresponding claims, the inventive point is that the corresponding technical problem can be solved with features fewer than all the features of a single embodiment being disclosed. Therefore, the claims following the detailed description are hereby expressly incorporated into the detailed description, where each claim itself serves as an independent embodiment of the present disclosure.

It can be understood by those skilled in the art that, except for mutually exclusive features, all features disclosed in this specification (including the claims, abstract and drawings) and all processes or units of any method or device disclosed in the specification can be combined in any way. Unless otherwise expressly stated, each feature disclosed in this specification (including the claims, abstract and drawings) may be replaced by an alternative feature that provides the same, equivalent or similar purpose.

In addition, it may be understood by those skilled in the art that, although some embodiments described herein include certain features included in other embodiments instead of other features, the combination of features of different embodiments is meant to be within the scope of the present disclosure and form different embodiments. For example, in the claims, any one of the claimed embodiments can be used in any combination.

The various component embodiments of the present disclosure may be implemented in hardware, or in software modules running on one or more processors, or in a combination thereof. It can be understood by those skilled in the art that a microprocessor or a digital signal processor (DSP) may be used in practice to realize some or all of the functions of some of the modules of the management apparatus for the automation system and the resource allocation apparatus for the automation system according to embodiments of the present disclosure. The present disclosure may alternatively be implemented as a program (such as a computer program and computer program product) for performing part or all of the methods described herein. Such a program implementing the present disclosure may be stored on a computer-readable medium, or may be in the form of one or more signals. Such a signal may be downloaded from an Internet website, or provided on a carrier signal, or provided in any other form.

It should be noted that the above embodiments illustrate rather than limit the present disclosure, and alternative embodiments may be designed by those skilled in the art without departing from the scope of the claims. In the claims, any reference symbol between parentheses shall not be construed as a limitation of the claims. The word "comprising" does not exclude the presence of elements or steps not listed in the claims. The word "a" or "an" preceding an element does not exclude the presence of multiple such elements. The present disclosure may be implemented by means of hardware comprising several different elements and by means of a suitably programmed computer. In a unit claim enumerating several apparatuses, several of these apparatuses may be embodied by a same hardware item. The use of the words "first", "second", "third" and the like does not indicate any order. These words may be interpreted as names.

The descriptions hereinabove are merely specific embodiments of the present disclosure or explanations of the specific embodiments. The protection scope of the present disclosure is not limited thereto. Any variations or substitutions made by those skilled in the art within the technical scope disclosed in the present disclosure are deemed to fall into the protection scope of the present disclosure. The protection scope of the present disclosure is based on the protection scope of the claims.

## Claims

1. A management method for an automation system, comprising:
in response to a resource pool addition instruction from a user for the automation system, constructing, based on devices in the automation system, a resource pool of the devices, wherein the devices in the resource pool have an identical device attribute, the device attribute comprises a plate position attribute for placing a sample container and a supported operation instruction, and the devices in the resource pool are configured to perform an operation on the sample container or a sample in the sample container according to the operation instruction;
building, based on the resource pool, a testing process of the automation system.

2. The management method according to claim 1, further comprising:
determining, in response to a device addition instruction from the user for the resource pool, whether a device attribute of a to-be-added device is identical to the device attribute of the devices in the resource pool; and
adding the to-be-added device to the resource pool in a case that the device attribute of the to-be-added device is identical to the device attribute of the devices in the resource pool.

3. The management method according to claim 2, further comprising:
in a case that the device attribute of the to-be-added device is different from the device attribute of the devices in the resource pool,
in response to a selection overriding instruction from the user, determining an attribute overriding direction, and modifying the device attribute of the to-be-added device or the device attribute of the devices in the resource pool based on the attribute overriding direction, wherein the attribute overriding direction comprises overriding the device attribute of the devices in the resource pool with the device attribute of the to-be-added device, or overriding the device attribute of the to-be-added device with the device attribute of the devices in the resource pool; or
canceling adding the to-be-added device to the resource pool in response to a device addition cancel instruction from the user.

4. The management method according to claim 2, wherein the resource pool addition instruction comprises type information of the devices in the resource pool, and wherein
the management method further comprises:
displaying, in response to the device addition instruction from the user for the resource pool, a list of devices with a type identical to a type of the devices in the resource pool, wherein devices of the identical type are configured to perform a same operation on the sample container or the sample in the sample container; and wherein
the adding the to-be-added device to the resource pool comprises:
adding, in response to a device confirmation instruction from the user for a selected device in the list, the selected device to the resource pool.

5. The management method according to claim 4, wherein the displaying, in response to the device addition instruction from the user for the resource pool, a list of devices with a type identical to a type of the devices in the resource pool comprises:
displaying, in response to the device addition instruction from the user for the resource pool, a list of devices with a type and a driving instruction identical to a type and a driving instruction of the devices in the operation pool and not belonging to any resource pool, in a case that the resource pool is a non-empty operation pool.

6. The management method according to claim 1 or 2, further comprising:
determining, in response to an attribute configuration instruction from the user for the devices, the device attribute of the devices; wherein
the supported operation instruction in the device attribute comprises at least one of duration information, expiration time information, and maximum waiting time information, wherein
the duration information is to determine duration for which the device is controlled to execute an operation instruction during the testing process;
the expiration time information is to determine maximum sample safe duration for the device being controlled to execute the operation instruction during the testing process; and
the maximum waiting time information is to determine maximum sample effective duration for the device being controlled to execute the operation instruction during the testing process.

7. The management method according to claim 1 or 2, further comprising:
determining, in response to a pre-operation/post-operation configuration instruction from the user for the device, a pre-operation performed before the device performs a main operation and/or a post-operation performed after the device performs the main operation, wherein the supported operation instruction in the device attribute comprises pre-operation and/or post-operation related information, and the pre-operation and/or the post-operation is performed by a corresponding execution device.

8. The management method according to claim 1 or 2, wherein
during the built testing process, all the devices in the resource pool are displayed in a form of the resource pool.

9. The management method according to claim 1 or 2, wherein the plate position attribute comprises one or more of: a gripping orientation, a plate position layout, operation execution mechanism information of a plate, delidding or not, a delidding manner, a permissible sample container type, and a plate position type.

10. The management method according to claim 1 or 2, wherein the device attribute further comprises a global attribute, and the global attribute is to establish a communication connection.

11. A resource allocation method for an automation system, comprising:
configuring, in response to a configuration instruction from a user for a resource pool in the automation system, a strategy for allocating resources for the resource pool, wherein devices in the resource pool have an identical device attribute, the device attribute comprises a plate position attribute for placing a sample container and a supported operation instruction, and the devices in the resource pool are configured to perform an operation on the sample container or a sample in the sample container according to the operation instruction; and
allocating, based on a strategy for allocating resources of a current resource pool, devices in the current resource pool when resources of the resource pool are allocated.

12. The resource allocation method according to claim 11, wherein the allocating, based on a strategy for allocating resources of a current resource pool, devices in the current resource pool comprises:
selecting, based on a least recently used strategy, a device has been idle for the longest time period among the devices in the resource pool when the devices of the resource pool are allocated;
selecting, based on a forefront priority strategy, a device corresponding to a plate position in a forefront in a plate position sequence of devices in the automation system when the devices of the resource pool are allocated; and/or
allocating, based on a resource pool sequence strategy, the devices based on a user-preset sequence of the devices in the resource pool when the devices of the resource pool are allocated.

13. A management apparatus for an automation system, comprising:
a resource pool construction module, configured to construct, based on devices in the automation system, a resource pool of the devices in response to a resource pool addition instruction from a user for the automation system, wherein the devices in the resource pool have an identical device attribute, the device attribute comprises a plate position attribute for placing a sample container and a supported operation instruction, and the devices in the resource pool are configured to perform an operation on the sample container or a sample in the sample container according to the operation instruction; and
a testing process building module, configured to build, based on the resource pool, a testing process of the automation system.

14. A resource allocation apparatus for an automation system, comprising:
a strategy configuration module, configured to configure, in response to a configuration instruction from a user for a resource pool in the automation system, a strategy for allocating resources for the resource pool, wherein devices in the resource pool have an identical device attribute, the device attribute comprises a plate position attribute for placing a sample container and a supported operation instruction, and the devices in the resource pool are configured to perform an operation on the sample container or a sample in the sample container according to the operation instruction; and
a resource allocation module, configured to allocate, based on a strategy for allocating resources of a current resource pool, devices in the current resource pool when resources of the resource pool are allocated.

15. An electronic device, comprising a processor and a memory, wherein the memory stores computer program instructions, and the computer program instructions, when being executed by the processor, are to perform the management method for the automation system according to any one of claims 1 to 10 and/or perform the resource allocation method for the automation system according to claim 11 or 12.

16. A storage medium, wherein the storage medium stores program instructions, and the program instructions, when being executed, are to perform the management method for the automation system according to any one of claims 1 to 10 and/or perform the resource allocation method for the automation system according to claim 11 or 12.
